# EUROPEAN PATENT APPLICATION

(11) **EP 0 704 292 A1**
(43) Date of publication of application: **03.04.1996**
(21) Application number: 95913367.9
(22) Date of filing: 29.03.1995
(51) Int. Cl.: B29C 45/17, B29C 45/26

(54) **RESIN MOLDING METHOD AND RESIN MOLDING MACHINE**

(30) Priority: 30.03.1994 JP 61179/94; 19.04.1994 JP 80623/94; 31.05.1994 JP 118722/94; 14.06.1994 JP 131916/94; 15.06.1994 JP 133454/94
(71) Applicant: SANKYOKASEI KABUSHIKI KAISHA, Ota-ku, Tokyo 146 (JP)
(72) Inventor: OHNO, Masakazu Sankyokasei Kabushiki Kaisha, Tokyo 146 (JP); SHIMIZU, Chuzo Sankyokasei Kabushiki Kaisha, Tokyo 146 (JP); NAKAZAWA, Osamu Sankyokasei Kabushiki Kaisha, Tokyo 146 (JP); SATO, Sumio Nagaoka Plant Niigata Engineering Co., Niigata 940 (JP); YOSHIZAWA, Yukio Nagaoka Plant, Nagaoka-shi Niigata 940 (JP)
(74) Representative: Guerre, Dominique
(86) International application number: JP9500589
(87) International publication number: WO9526865

(57) **Abstract**

A resin molding method comprising a cleaning step comprising injecting a molten resin from a resin injection unit under such a condition that the matching portions of dies can be somewhat spaced from each other by loosening clamping of the dies to thereby permit the molten resin to flow into a cavity and a gap between the matching portions of the dies, and discharging a molding integrally formed by the cavity and the gap between the matching portions of the dies after the molten resin has solidified. Thus an attachment attached to the gap between the matching portions of the dies is mixed into moldings formed in the cleaning process, so that the attachment is discharged together with the moldings upon ejection of the moldings. Accordingly, cleaning can be positively and efficiently effected without expenses and without lowering an efficiency of the molding operation.

## Description

### TECHNICAL FIELD

The present invention relates to a method and apparatus for producing a molded product by introducing molten resin into a mold cavity. In particular the invention relates to a resin molding method and resin molding apparatus designed to allow easy cleaning of the mold.

### BACKGROUND ART

There are various resin molding apparatus available for the formation of molded products by introduction of molten resin into mold cavities. To enable removal of the molded product from these types of resin molding apparatus, the mold is designed to be separated into a number of pieces. Consequently, even if these individual pieces are held together with a considerable amount of pressure, the injected molten resin invariably leaks from the cavity into the gap between the mating surfaces of the mold (the parting line), so that products formed from the resin decomposition of the leaked resin adhere in this gap.

Furthermore, depending on the type of mold, some varieties are provided with an air vent (chamber) very close to the edge of the cavity, for the purpose of gas removal. When these types of molds are used, the resin decomposition products mentioned above adhere very readily in the gap between the cavity and the air vent, as well as to the air vent itself.

In addition, some resin molding apparatus include an aperture on the inside face of the cavity in which is fitted a free moving ejection pin. This pin is used to push, and thus separate the molded product from the mold. When molten resin is injected into the cavity of this type of resin molding apparatus, the end surface of the ejection pin is aligned with the internal surface of the cavity. Small amounts of the molten resin injected into the cavity then led into the gap between the ejection pin and the aperture and adhere to the inside surface of the aperture.

In the molding process, this problem of adherents sticking to the molds is particularly severe when any of the most commonly used resins or the recent so-called ultra engineering plastics are used.

These adherents need to be removed as they promote corrosion of the molds and also give rise to problems of instability of the molding conditions. Removal of these adherents is currently an extremely troublesome operation involving periodic opening of the mold, followed by a lengthy cleaning of the mating surfaces. Consequently, a simple method for removing these adherents has been required.

In view of the abovementioned problems associated with these type of adherents, it is an object of the present invention to provide a resin molding method and apparatus whereby adherents formed in the molding process can be removed with a simple procedure, at low cost, and with highly efficient cleaning.

### DISCLOSURE OF THE INVENTION

The method of molding resin according to the present invention uses a resin molding apparatus comprising; a resin injection section, a cavity formed when mating surfaces of a plurality of molds are fitted together, a molten resin passage for connecting to the resin injection section, and a gate section for connecting the molten resin passage to the cavity, wherein molten resin is first introduced into the cavity from the resin injection section via the molten resin passage and the gate section, then following hardening of the resin, the molds are unclamped, the mating surfaces separated, and the molded product then ejected from the cavity. The method has a cleaning process wherein; the molds are loosened to enable the mating surfaces to move apart slightly, the molten resin is then injected from the injection section so that the molten resin flows into the cavity and the gap between the mating surfaces of the mold, and after hardening, the molded product formed as one in the cavity and the small gap between the mating surfaces is ejected. In this way any adherents stuck in the gap between the mating surfaces of the mold are mixed in with the molded product formed by the mold cleaning process, and the molded product together with the adherents removed with ejection of the molded product. Hence, with this method, with the molds simply loosened to enable the mating surfaces to move apart slightly, then any adherents stuck in the small gap of the parting line, being the gap between the mating surfaces of the mold, can be completely cleaned off and removed by carrying out injection molding in the same way as for the standard molding operation. Hence the conventional detailed method involving opening up the molds and cleaning is not required. Cleaning can therefore be carried out reliably with high efficiency without additional costs or reduction in molding efficiency.

Moreover with the cleaning process, after the molds are loosened to enable the mating surfaces to move apart slightly, then once the mating surfaces have been moved apart slightly, the molten resin is injected from the injection section so that the molten resin flows into the cavity and the gap between the mating surfaces of the mold. In this way, the resin which has been melted can completely permeate into the gap between the mating surfaces.

Furthermore with the cleaning process, the molds are loosened to enable the mating surfaces to move apart slightly, and a slightly greater volume of resin than that corresponding to the volume of the cavity is injected from the injection section so that the molten resin flows into the cavity and overflows therefrom and is forced into the gap between the mating surfaces of the mold by the pressure. In this way, the operation of separating the mating surfaces of the mold is not required.

With the plurality of molds, an air vent section for the purpose of air removal, may be formed adjoining the cavity, in the respective mating surfaces, by fixing the molds together in their mating condition. Then in the cleaning operation, the molten resin is injected from the injection section so that the molten resin flows into the cavity and the gap between the mating surfaces of the mold, and also flows into the air vent section via the gap between the mating surfaces of the mold. In this way, any adherents stuck in the air vent section can also be completely cleaned off and removed.

Another method of molding resin according to the present invention uses a resin molding apparatus comprising; a resin injection section, a cavity formed when mating surfaces of a plurality of molds are fitted together, a molten resin passage for connecting to the resin injection section, and a gate section for connecting the molten resin passage to the cavity, wherein molten resin is first introduced into the cavity from the resin injection section via the molten resin passage and the gate section, then following hardening of the resin, the molds are unclamped, the mating surfaces separated, and the molded product then ejected from the cavity. With this method, the gate sections are provided for a single cavity at two mutually opposite locations with the cavity therebetween, and the molten resin passage is branched into two with each branch connected to a corresponding gate section, and on completion of each predetermined molding cycle, the gate section used for injecting resin into the cavity is alternated. In this way, the molten resin may be injected for example into the cavity from one of the gate sections, and following formation and subsequent ejection of the molded product, the next molding operation can involve injecting the molten resin from the other gate section into the cavity, and subsequent ejection of an additional molded product. Therefore, the molten resin will not always flow through the cavity in a fixed direction, but will change each time the gate section being used is alternated. Consequently there is less likelihood of adherents sticking to the inner faces forming the cavity of the mold, and even if some adherents do form, they are reliably removed when the flow direction changes.

Shut-off pins may be respectively provided in each branch of the branched molten resin passage for shutting off the respective branch, and one of the branch portions may be shut-off by one of the shut-off pins, and molten resin injected from the gate section into the cavity via the other open branch portion. In this way, alternating (switching) of the gate section being used can be reliably carried out.

Yet another method of molding resin according to the oresent invention uses a resin molding apparatus comprising; a resin injection section, a cavity formed when mating surfaces of a plurality of molds are fitted together, an air vent section for the purpose of air removal, formed adjoining the cavity, in the respective mating surfaces, by fixing the plurality of molds together in their mating condition, a molten resin passage for connecting to the resin injection section, and a cavity gate section for connecting the molten resin passage to the cavity, wherein molten resin is first introduced into the cavity from the resin injection section via the molten resin passage and the cavity gate section, then following hardening of the resin, the molds are unclamped, the mating surfaces separated, and the molded product then ejected from the cavity. The method involves an air vent gate provided in the air vent for connecting the air vent to the molten resin injection section, and a cleaning process wherein; the molds are loosened to enable the mating surfaces to move apart slightly, the molten resin is then injected from the injection section so that the molten resin flows from the air vent gate to the air vent and the gap between the mating surfaces of the mold, and into the cavity via the gap between the mating surfaces of the mold, and after hardening, the molded product formed as one in the cavity, the small gap between the mating surfaces, and the air vent, is ejected. In this way ally adherents stuck in the air vent and any adherents stuck in the gap between the mating surfaces of the mold are mixed in with the molded product formed by the mold cleaning process, and the molded product together with the adherents removed with ejection of the molded product. Hence, with this method, with the molds simply loosened to enable the mating surfaces to move apart slightly, then any adherents stuck in the small gap of the parting line, being the gap between the mating surfaces of the mold, and any adherents stuck in the air vent can be completely cleaned off and removed by carrying out injection molding in the same way as for the standard molding operation. Hence the conventional detailed method involving opening up the molds and cleaning is not required. Cleaning can therefore be carried out reliably with high efficiency without additional costs or reduction in molding efficiency.

A further method of molding resin according to the present invention uses a resin molding apparatus comprising; a resin injection section, a cavity formed when mating surfaces of a plurality of molds are fitted together, a molten resin passage for connecting to the resin injection section, a gate section for connecting the molten resin passage to the cavity, an aperture formed in a cavity surface forming the cavity of the mold, and an ejector pin fitted into the aperture, wherein with the end surface of the ejector pin aligned with the cavity surface of the mold, molten resin is first introduced into the cavity from the resin injection section via the molten resin passage and the gate section, then following hardening of the resin, the molds are unclamped, the mating surfaces separated, and the molded product in the cavity then ejected by pushing out the ejector pins from the mold. With this method, with the ejector pins retracted into the apertures so that their end surfaces are recessed from the cavity surface of the mold, the molten resin is injected from the injection section so that the molten resin flows into the cavity and the apertures, and after hardening, the molded product formed as one in the cavity and the apertures is ejected by pushing out the ejector pins. In this way, any adherents stuck in the apertures are mixed in with the molded product formed by the mold cleaning process, and the molded product together with the adherents removed with ejection of the molded product. Hence, with this method, with the molds simply loosened to enable the mating surfaces to move apart slightly, then any adherents stuck in the apertures can be completely cleaned off and removed by carrying out injection molding in the same way as for the standard molding operation. Hence the conventional detailed method involving opening up the molds and cleaning is not required. Cleaning can therefore be carried out reliably with high efficiency without additional costs or reduction in molding efficiency.

An apparatus for molding resin according to the present invention comprises; a molding apparatus which forms molded products by injecting molten resin into a mold and in which standard molding conditions for forming standard molded products, and cleaning conditions for forming a cleaning molded product for cleaning the mold can be switched, a standard molding conditions setting section for setting molding conditions for the standard molding conditions and outputting the set molding conditions, a mold cleaning conditions setting section for setting molding conditions for the cleaning conditions and outputting the set molding conditions, a central processing unit for controlling operation of the molding apparatus, and a switching device for selectively connecting one of the standard molding conditions setting section and the mold cleaning conditions setting section to the central processing unit. In this way, with the standard molding conditions setting section connected to the central processing unit by the switching device, the central processing unit controls the molding apparatus with molding conditions for the standard molding conditions set and output from the standard molding conditions setting section. By so doing, the molding apparatus forms standard molded products. On the other hand, when the switching device connects the mold cleaning conditions setting section to the central processing unit, the central processing unit controls the molding apparatus with molding conditions for the mold cleaning conditions set and output from the mold cleaning conditions setting section. By so doing, the molding apparatus forms mold cleaning products for cleaning the mold. Therefore the molding apparatus can quickly and easily switch between conditions for carrying out standard molding and conditions for carrying out mold cleaning.

Moreover, the switching device may count the number of molding operations under standard molding conditions with the central processing unit connected to the standard molding conditions setting section, and when the counted number matches a previously set number, connect the central processing unit to the mold cleaning conditions setting section. In this way, the cleaning of the mold can be automatically carried out each time the number of molding operations reaches a predetermined number.

Moreover, the central processing unit may output a judgement signal indicating that the molded product is a mold cleaning product when a mold cleaning product is formed by the molding apparatus, based on molding conditions output from the mold cleaning conditions setting section. In this way, if the output of the discriminating signal is detected, then the mold cleaning product can be reliably discarded.

### BRIEF DESCRIPTION OF THE DRAWINGS

Figure 1 is a schematic plan view of a first embodiment of the present invention;
Figure 2 is a schematic plan view of the first embodiment at the time of cleaning;
Figure 3 is a schematic sectional elevation view of the first embodiment at the time of cleaning;
Figure 4 is a plan view of a cavity of a second embodiment of the present invention;
Figure 5 is a sectional view of a molten resin passage of a mold of the second embodiment;
Figure 6 is a sectional view of a cavity of the mold of the second embodiment;
Figure 7 is a plan view of a double removal type of cavity according to a third embodiment of the present invention;
Figure 8 is a sectional view of the cavity of the mold of the third embodiment;
Figure 9 is a sectional view of a cavity at the time of standard molding according to a fourth embodiment of the present invention;
Figure 10 is a sectional view of a cavity at the time of cleaning according to the fourth embodiment;
Figure 11 is a perspective view of eject pins and a switching plate according to the fourth embodiment;
Figure 12 is a block diagram showing an injection molding apparatus according to a fifth embodiment of the present invention;
Figure 13 is an elevation view showing a clamping condition in a standard molding operation of the injection molding apparatus of the fifth embodiment;
Figure 14 is an elevation view showing a mating face of a mold on completion of a standard molding operation with the injection molding apparatus of the fifth embodiment;
Figure 15 is an elevation view showing a clamping condition in a mold cleaning operation of the injection molding apparatus of the fifth embodiment;
Figure 16 is an elevation view showing a mating surface of a mold on completion of a mold cleaning operation of the injection molding apparatus of the fifth embodiment;
Figure 17 is a flow chart for the injection molding apparatus of the fifth embodiment;
Figure 18 shows a sixth embodiment of the present invention, being an elevation view showing a clamping condition in a standard molding operation of a direct pressure injection molding apparatus;
Figure 19 is an elevation view showing a clamping condition in a mold cleaning operation of the injection molding apparatus of the sixth embodiment; and
Figure 20 is a flow chart for the injection molding apparatus of the sixth embodiment.

### BEST MODE FOR CARRYING OUT THE INVENTION

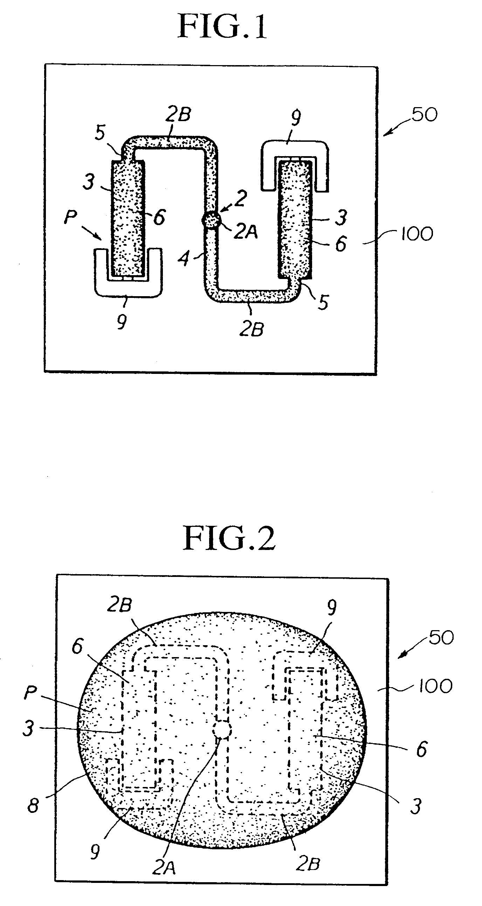

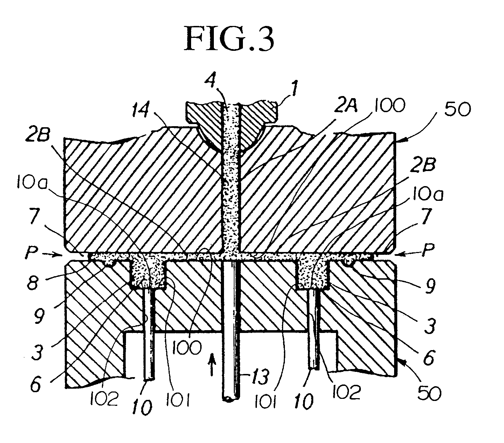

A first embodiment of the present invention is described below, with reference to Figures 1 to 3. First is an explanation of the resin molding apparatus. The resin molding apparatus comprises a resin injection section 1, for injecting a molten resin, two molds 50,50, and a clamping mechanism for holding two mating surfaces 100,100 of the molds 50,50 together. The molds 50,50 comprise two cavities 3, which are formed when the two mating surfaces 100,100 of the molds 50,50 are fitted together, a molten resin passage 2 for connecting to the resin injection section 1, and gate sections 5 for connecting the molten resin passage 2 to the cavities 3.

The resin molding apparatus is used to repeatedly produce, and then eject, uniform molded products 6, by carrying out repetitions of the molding operation wherein, molten resin is first introduced into the cavities 3 from the resin injection section 1 via the molten resin passage 2 and through the gate sections 5, then following hardening of the resin, the two molds 50,50 are unclamped, the two mating surfaces 100,100 separated along a parting line P opening up the cavities 3, and the molded products then ejected from the cavities 3.

The molten resin passage 2 is constructed of a single sprue section 2A which is connected to the resin injection section 1, and two runner sections 2B which branch off in opposite directions from the sprue section 2A. Each cavity 3 is connected to one end of a runner section 2B via respective gate sections 5. In this way, two molded products 6 can be produced in each molding operation. In addition, air vents 9 are provided close to the ends of the cavities 3 opposite to the gate sections 5, in the mating surfaces 100,100 of the molds 50,50.

With this resin molding apparatus in a standard molding process, a predetermined fixed amount of molten resin 4 is injected from the resin injection section 1, through the sprue section 2A, runner section 2B, and the respective gate sections 5, into the respective cavities 3.

At this time, the two molds 50,50 are held together by a clamping mechanism at a predetermined clamping pressure, so that in principle, no resin should be forced into the gap 7 between the two mating surfaces 100,100 constituting the parting line P. However, in practice, a small amount of the resin 4 does leak into the gap 7 between the two mating surfaces 100,100 and adheres there.

Gas produced in the cavities 3 passes through the gap 7 between the two mating surfaces 100,100 and escapes into the air vents 9.

Cavity surfaces 101 forming the cavities 3 of the mold 50 are formed with apertures 102, in which are fitted free sliding ejection pins 10. During regular injection molding, the end surfaces 10a of these ejection pins 10 are located in their normal position, aligned with the cavity surfaces 101 of mold 50. Once the molten resin in the cavities 3 has hardened, the mold 50 is opened along the parting line P, thus opening the cavities 3, and when the ejection pins 10 are pushed out of the mold 50, the molded products 6 produced inside the cavities 3, are pushed out and ejected from the cavities 3.

In using this resin molding apparatus and repeating this type of molding operation, uniform molded products 6 can be formed and ejected in quick succession. Following completion of a predetermined number of these molding operations, or alternatively, following continuous operation of the molding operation for a predetermined time period, the two molds are loosened, either by reducing the clamping pressure applied by the clamping mechanism, or by releasing the clamping mechanism entirely. In so doing the two mating surfaces 100,100 of the molds 50,50 are able to move apart slightly. With the molds in this state, a slightly greater volume of molten resin 4 than the standard volume is injected from the resin injection section 1, in the same way as in the standard molding operation, into the cavities 3. Alternatively, having released the clamping mechanism so that the two mating surfaces 100,100 can move apart, the two mating surfaces can be forcibly moved apart slightly and the molten resin 4 then injected from the resin injection section 1, in the same way as in the standard molding operation, into the cavities 3.

As a result of this process, molten resin 4 overflows from the cavities 3, and flows smoothly and vigorously into the gap between the mating surfaces 100,100 of the molds 50,50, engulfing and melting any adherents, forced along by the pressure of molten resin 4. The molten resin then also flows through the gap 7 between the two mating surfaces 100,100 of the molds 50,50 and into the air vents 9 engulfing and melting any adherents in its path.

Once the molten resin 4 has hardened in this condition, the mold 50 is opened along the parting line P. The molded products 6 are then pushed out of the cavities 3 by the ejection pins 10, by pushing the ejection pins 10 out from the mold 50 in the direction of the molded products 6. On so doing, the unwanted molded portion 8 used for cleaning purposes, which has spread out in a thin film through the gap 7 between the mating surfaces 100,100 and the air vents 9, is pushed out, together with the molded product 6 to which it is attached, and any remaining adherents which were stuck in the gap 7 between the mating surfaces 100,100 or in the air vents 9 are also removed. This procedure describes the cleaning process.

By using this type of cleaning process, any adherents are removed by a combination of the heat and flow pressure applied by the molten resin 4 which flows into the gap 7 between the mating surfaces 100,100, and then absorbed into the unwanted molded portion 8 used for cleaning purposes as it hardens. Furthermore, the adherents can then be completely removed from the parting line P, by ejection of the unwanted molded portion 8 used for cleaning purposes, along with the molded product 6 to which it is attached, thus providing a reliable method for cleaning and removal of all adherents.

To ensure an even more reliable removal of the adherents in the gap 7 between the mating surfaces 100,100 and on the inside walls of the cavities 3, the flow direction of the molten resin 4 may be altered. That is to say the air vent inlet gates, which branch off from the runner 2B, may be connected to the air vents 9, and for the cleaning process described above, the molten resin 4 injected in through these air vent inlet gates, through the air vents 9, and then through the gap 7 between the mating surfaces 100,100 into the cavities 3. In so doing, because the molten resin 4 is injected into the cavities 3 from the opposite direction to its normal route through the gate sections 5, the cleaning effect is enhanced.

Furthermore with the cleaning process outlined above, factors such as the variety of resin used and the molding conditions will determine how frequently this must be carried out. That is, after how many repetitions of the standard molding operation or alternatively after what length of continuous operation of the molding operation.

This particular embodiment employs a sprueless system, where a rod shaped member 13 is used to force any unused molded material 14 left inside the sprue section 2A of the molten resin passage 2, back into the resin injection section 1.

This sprueless method involves injection of molten resin 4 into the cavities 3, and then once the resin 4 has hardened in the cavities 3, pushing of the rod shaped member 13 into the sprue section 2A , forcing any unused resin 14 left inside the sprue section 2A back into the resin injection section 1, and at the same time blocking the sprue section 2A.

Employment of this sprueless method avoids wastage of resin material as, unlike other current methods, it does not require ejection of unused molded material left inside the sprue section. When employed in this way the so-called sprueless molding process enables a very simple arrangement, thus further enhancing the practical merits of the present invention.

Furthermore, employment of this sprueless method removes the need for the use of mini runners or the even more expensive hot runner system, as the unused molded material 14 left in the molten resin passage 2, can be forced back inside the resin injection section 1 by the rod shaped member 13 while being melted by the heat from the resin injection section 1, and then be completely melted in the hot resin injection section 1.

Moreover, even if the molten resin 4 inside the molten resin passage 2 (in the sprue section) cools and hardens, with this sprueless method it is still able to be molded, and so the small diameter injection nozzles presently used are unnecessary. Consequently, there is minimal nozzle resistance during injection of the molten resin 4, and low pressure injection is thus possible. This means that warping and deformation of the molded products 6 can be reduced, as can variations in the quality of the molded products 6 produced in each individual molding operation.

Furthermore because the resin injection section 1 is blocked by the rod-shaped member 13, even if the diameter of the spruce section 2A of the molten resin passage 2 is made quite large, resin leakage from the sprue section 2A can be completely prevented.

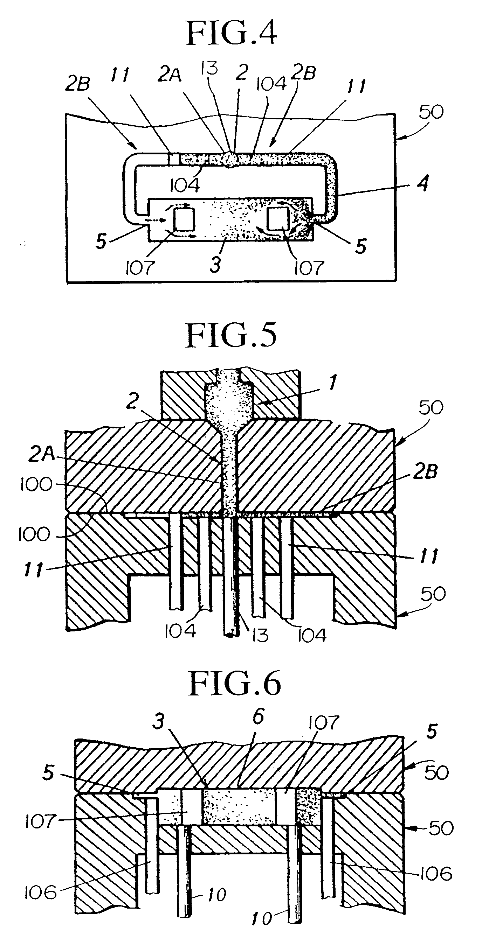

A second embodiment of the present invention will now be described with reference to Figures 4 to 6.

With the resin molding apparatus of the second embodiment a single cavity 3 is connected at two places to the gate sections 5 through which molten resin 4 can flow. The gate sections 5 are provided at mutually opposite locations with the cavity 3 therebetween. A molten resin passage 2 which is connected to a resin injection section 1 also branches into two, with each branch connected to a corresponding gate section 5. The gate sections 5 are set in mutually opposing directions so that two streams of resin 4 flowing through the gate sections 5 into the cavity 3 would impinge on each other. Furthermore, cores 107 are arranged inside the cavity 3.

Shut-off pins 11 are provided in each branch of the molten resin passage 2 for shutting off flow through that particular branch of the molten resin passage 2. Specifically, a shut-off pin 11 is provided for each of the runners 2B which guide the molten resin 4 from the sprue section 2A of the molten resin passage 2 to the two corresponding gate sections 5. Each shut-off pin 11 projects into the runner 2B at a point midway along its length, thus making it possible to shut off the runner 2B. With one shut-off pin 11 projected and one runner 2B thus shut-off, and the other runner 2B in an open condition, molten resin 4 is injected from the gate section 5 via the open runner, and into the cavity 3.

For example, molten resin 4 can be injected into the cavity 3 from one of the two gate sections 5, and following formation and subsequent ejection of the molded product 6, the next molding operation can involve injecting molten resin 4 from the other gate section 5 into the cavity 3, and subsequent ejection of an additional molded product 6.

This method therefore means that the molten resin 4 will not always flow through the cavity 3 in a fixed direction, but will change each time the gate section 5, which acts as the injection port, is alternated

Consequently, there is less likelihood of adherents sticking to the walls of the cavity 3, and even if some adherents do form, they are cleaned off and removed when the flow direction changes to one which impinges on their position.

The gate section 5 being used may be alternated with each molding operation, or one of the gate sections 5 may be used for a predetermined number of molding operations, and the other gate section 5 then used for a predetermined number.

Furthermore, in a situation wherein use of the other gate section 5 results in a change in the molding conditions and subsequent production of an inferior molded product 6, injection through this gate section can be used as a cleaning operation. Thus completion of a predetermined number of molding operations through the first gate section 5 could be followed by a change over to the other gate section 5 purely for cleaning purposes.

With conventional apparatus a gate section is provided at only one location in this type of cavity, and molding is carried out by injection of molten resin in through this gate section. As a result, the molten resin flow inside the cavity is always in an approximately fixed direction, so that by-products (adherents) stick readily to the walls, and especially to the sides of the cores sheltered from the molten resin flow. These adherents thus alter the molding conditions, making the mass production of molded products to a satisfactory standard impossible. With the present embodiment however, the gate sections 5 are provided at opposite ends of the cavity, allowing complete reversal of the flow direction, and so by alternating the gate section used, and thus alternating the injection point for the molten resin, it becomes less likely that adherents will form, and any adherents which do form will be cleaned away by the reversal in flow direction.

In situations such as with the present embodiment, where the cavity is left right symmetrical and injection of molten resin 4 from either the left or right gate section 5 results in no change in molding conditions, the gate section 5 used may be alternated for each molding operation. However, if for example a mold has one gate section with a thick cross section, and the other gate section with a thin cross section, the molding conditions will differ for the thick cross section gate section 5 and the thin cross section gate section 5. Consequently, every time the gate section employed is altered (switched), the molding conditions will need to be altered accordingly. Hence, the molding conditions could be set for use with one of the gate sections 5 of the mold, and molding operations using the other gate section 5 of the mold used not for obtaining molded products 6, but rather as a cleaning operation. In such a case, after completion of a predetermined number of molding operations, the gate section employed could be alternated, and then several molding operations carried out for the sole purpose of cleaning.

Numeral 104 in the figures denotes ejector pins which are arranged parallel to the shut-off pins 11, for ejecting of the runners. Numeral 10 denotes ejector pins for ejecting the molded product 6, and numeral 106 denotes gate close-off pins for closing the gate sections 5 to thus close off the cavity.

As with the first embodiment, the second embodiment employs a sprueless system, where a rod shaped member 13 is used to force any unused molded material left inside the sprue section 2A of the molten resin passage 2, back into the resin injection section 1.

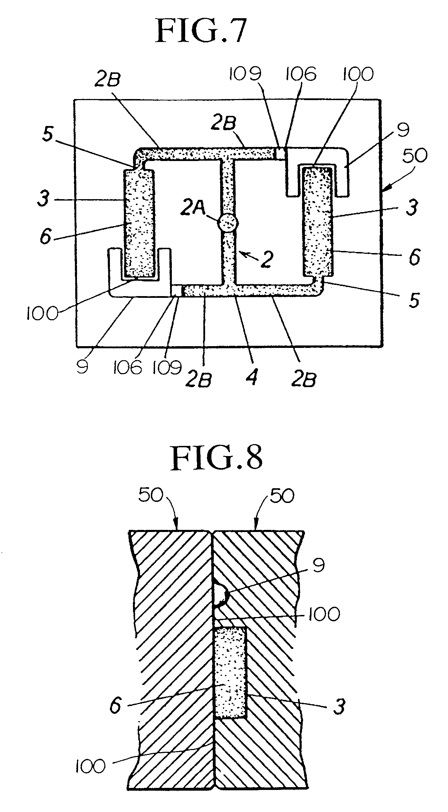

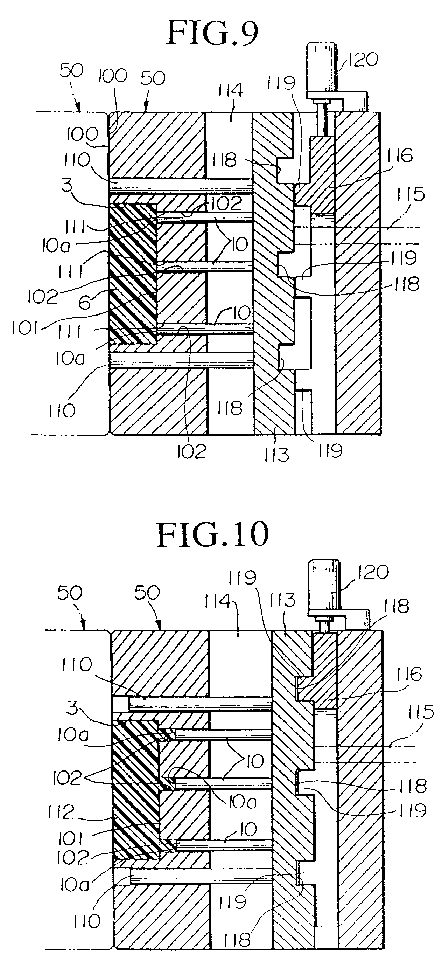

A third embodiment of the present invention will now be described with reference to Figures 7 and 8.

The resin molding apparatus of the third embodiment has air vents 9, for air removal, which are formed adjoining the cavities 3 in the two mating surfaces 100,100, by fixing the molds 50,50 together in their mating condition. In the third embodiment, the air vents 9 are on the opposite side of the cavities to the gate sections 5, and air vent inlet gates 109 are provided which connect the air vents 9 to the molten resin passage 2. Gate close-off pins 106 are provided in the air vent inlet gates 109 to enable closure thereof. During standard injection molding operations, the injection molding is carried out with the air vent inlet gates 109 closed off by the gate close-off pins 106. Then, after each molding operation, or alternatively after a predetermined number of molding operations, a cleaning operation is carried out by moving the gate close-off pins 106 to open the air vent inlet gates 109, and then injecting molten resin 4 in through the air vent inlet gates 109 and into the air vents 9.

Hence, after each molding operation, or alternatively after a predetermined number of molding operations, any adherents inside the air vents 9 can be removed by injecting molten resin 4 in through the air vent inlet gates 109 provided in the air vents 9. Furthermore, by releasing the clamping pressure applied to the molds by the clamping mechanism and allowing the two mating surfaces 100,100 to separate slightly, the pressure of the resin can force the resin out from the air vents 9, through the gap between the two mating surfaces 100,100 and into the cavities 3, removing any adherents stuck in the gap between the two mating surfaces 100,100. Alternatively, the two mating surfaces 100,100 can be forcibly moved apart slightly before injection of the resin.

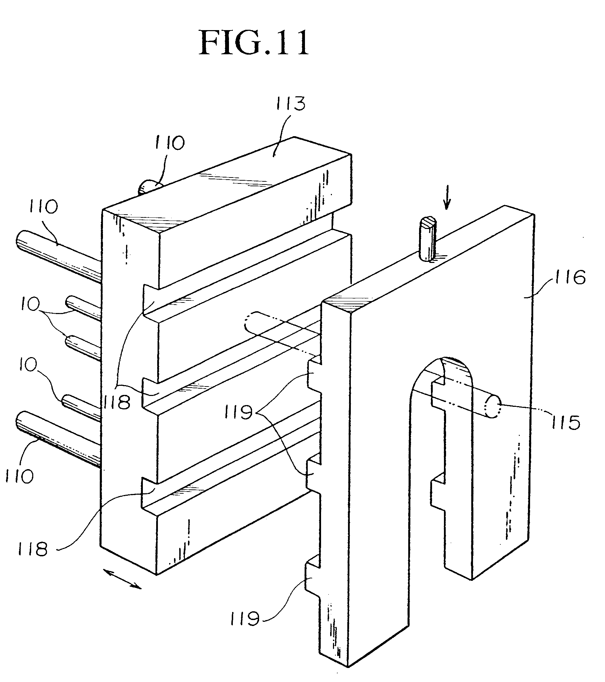

A fourth embodiment of the present invention will now be described with reference to Figures 9 to 11.

The resin molding apparatus of the fourth embodiment has apertures 102 formed in the cavity surface 101 forming the cavity 3 of the mold 50, and ejector pins 10 fitted into these apertures 102. During standard injection molding operations the ejector pins 10 are located in their regular position with their end surfaces 10a aligned with the cavity surface 101 of the mold 50. When the pins are pushed out of the mold 50 the molded product 6 inside the cavity 3 is ejected.

As is shown in Figure 9 , the ejector pins 10 are fixed in their regular molding position so that their end surfaces 10a form a single smooth surface with the cavity surface 101 of the mold 50. Standard molding operations are repeated with the ejector pins in this position. Hence (although omitted from Figure 9) molten resin 4 is injected from the resin injection section 1, through the molten resir passage 2 and into the cavity 3 where it is hardened by cooling, using the same procedure as that employed in the first embodiment. Subsequently, the three ejector pins 10 are pushed into the cavity 3 separating and ejecting the molded product 6 from the mold.

Mass production of the molded product 6 is carried out by repeating this standard molding operation. However over time, with repetition of this standard molding operation, adherents form in the clearance 111 required to allow sliding of the ejector pins 10 through their respective apertures 102.

Consequently, following each molding operation, or alternatively following a predetermined number of molding operations, the ejector pins 10 are retracted into the apertures 102 so that their end surfaces 10a are recessed from their normal positions shown in Figure 9, to below the cavity surface 101 of the mold 50. They are then fixed in this position and molten resin 4 is injected from the resin injection section 1 so as to flow into the cavity 3 and apertures 102. The molten resin 4 then engulfs any adherents and melts them. The resin 4 then hardens forming an abnormal molded product 112 with protrusions of unnecessary resin corresponding to the recess amount of the ejector pins 10. The abnormal molded product 112 is then ejected from the cavity 3 by moving the ejector pins 10 and pushing them out from the cavity surface 101. With this procedure any adherents stuck in the clearances 111 of the apertures 102 in the cavity surface 101 are mixed in with the molten resin 4, hardened, and then ejected, thus removing them from the mold 50.

With this molding procedure an abnormal molded product 112 with protrusions of resin corresponding to the recess amount the ejector pins 10 is ejected. This maintenance procedure which produces the abnormal molded product 112, offers complete removal of any adherents, through the cleaning and clearing effects of the flow of high temperature molten resin, and the subsequent pushing out and ejection of this resin once it has hardened.

With this embodiment, each ejector pin 10 is secured to all ejector plate 113 which moves back and forth guided by return pins 110. The ejector plate 113 is positioned in a cavity 114 large enough to allow this movement, and is moved back and forth by a drive rod 115, to control the movement of the ejector pins 10.

Also with this embodiment, a switching plate 116 is provided for controlling the switching of the return position of the ejector plate 113. This switching plate 116 is constructed so as to enable control of switching the position of the eject pins 10 from their standard position to their lowered position when the ejector plate 113 is moved to its initial position, furthest away from the cavity 3.

Hence, with this embodiment, the ejector plate 113 and the switching plate 116 are formed with intermeshing recesses 118 and protrusions 119. The switching plate 116 is moved up or down by a drive source 120 to a position where the protrusions 119 cannot mesh with the recesses 118, and the ejector plate 113 and switching plate 116 then abutted together. Upon so doing, as shown in Figure 9, the initial position of the ejector pins 10 are set in their standard molding position, with the end surfaces 10a of the pins aligned with the cavity surface 101.

At the time of the maintenance molding procedure, the ejector pins 10 are moved back even further as shown in Figure 10, by controlling the movement of the switching plate 116 to allow the protrusions 119 and recesses 118 to intermesh, so that in the initial position of the ejector pins 10 the end surfaces 10a of the pins are recessed below the cavity surface 101.

With this embodiment the initial position of the ejector pins 10 can be controlled by simply controlling the movement of the switching plate 116. Hence the initial position of the ejector pins 10 can be controlled by simple operation of the drive source 120, which controls the movement of the switching plate 116.

The present embodiment allows a very simple construction. For example, existing mold structures can simply be improved to allow control of the movement of the ejector pins 10. Similarly, operation is also straight forward, as simply by exercising control over the movement of the ejector pins 10, and then carrying out molding operations in the standard way, any adherents can be removed.

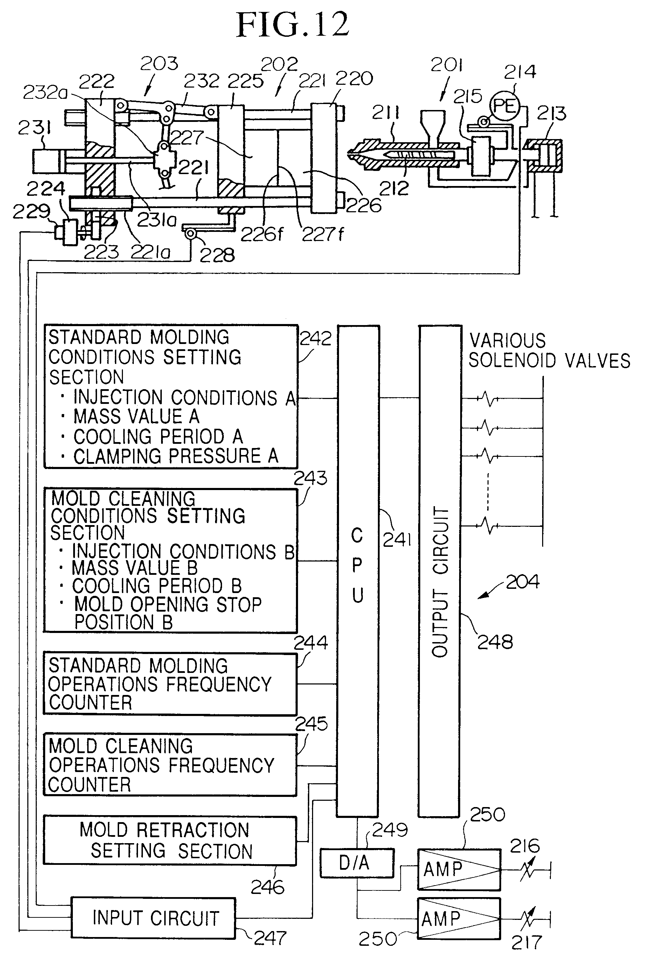

A fifth embodiment of the present invention will now be described with reference to Figures 12 to 20.

The resin molding apparatus of the fifth embodiment is a toggled injection molding apparatus, and includes as its essential components an injection device 201, a molding device 202, a clamping device 203, and a control device 204.

With the injection device 201, an injection cylinder (actuator) 213 is used to move a screw 212 located inside a heated tract 211 forward (towards the left as shown in Figure 12) so that resin inside the tract 211 is injected into the molding device 202. An injection position sensor 214 is fitted to the injection cylinder 213, and a hydraulic motor (actuator) 215 for rotating the screw 212, is provided between the screw 212 and the injection cylinder 213.

As the screw 212 is rotated by the hydraulic motor 215, and the tip of the screw 212 pushes out the resin in a molten state, the pressure due to the weight of the resin forces the screw back (towards the right as shown in Figure 12), allowing weighing of the injected resin. The mass of resin thus can be determined by detecting the amount of this backward movement of the screw 212, using the injection position sensor 214.

The hydraulic circuit of the injection cylinder 213 includes a proportional pressure control valve 216 incorporating a solenoid valve, and a proportional flow control valve 217. Control of the injection pressure is achieved by the pressure control valve 216, and control of the injection velocity is achieved by the flow control valve 217. Furthermore, the injection device 201 is free moving (in a left right direction as shown in Figure 12) with respect to the molding device 202.

In the molding device 202, one end of each of the four tie bars 221 (only two shown in the figure) is attached to a fixed plate 220, with the other end of each of the tie bars 221 being attached to an end plate 222. The end plate 222 has a screw portion 221a of the tie bar 221 screwed into a nut 223, and is moved along the tie bar 221 axis by rotation of the nut 223 using a hydraulic motor (actuator) 224.

A movable plate 225 is provided in between the fixed plate 220 and the end plate 222. The movable plate 225 can move freely along the tie bars 221 (in a left right direction in Figure 12). Molds 226 and 227 are attached to the fixed plate 220 and movable plate 225 respectively. A clamp position sensor 228 is provided on the movable plate 225, and a mold position sensor 229 on the hydraulic motor 224.

The clamping device 203 comprises a clamping cylinder (actuator) 231 and a toggle link mechanism 232. The clamping cylinder 231 is attached to the end plate 222, while the toggle link mechanism 232, which is positioned between the end plate 222 and the movable plate 225, is coupled to the end plate 222 at one end, and to the movable plate 225 at the other, as well as being coupled to the piston rod 231a of the clamping cylinder via the crosshead 232a. The clamping device 203 is operated by extension of the clamping cylinder 231, which pushes the movable plate 225 towards the fixed plate 220 by means of the toggle link 232, thus clamping the molds 226, 227 between the fixed plate 220 and the movable plate 225.

The clamping pressure applied to the molds 226, 227 by the clamping device 203 is proportional to the extension of the tie bars 221 at the time of clamping, and providing the thickness of the molds is uniform, will be larger, the smaller the separation distance between the fixed plate 220 and the end plate 222. Adjustment of the clamping pressure can thus be carried out by rotation of the nut 223 using the hydraulic motor 224. In this case, the amount of rotation of the nut 223, which will correspond to the position of the end plate 222, is detected by the mold position sensor 229.

The control device 204 comprises a central processing unit 241 to which is connected a standard molding conditions setting section 242, a mold cleaning conditions setting section 243, a standard molding operations frequency counter (switching device) 244, a mold cleaning operations frequency counter 245, a section 246 for setting the mold retraction distance for mold cleaning operations (referred to hereunder as a mold retraction setting section 246), an input circuit 247 and an output circuit 248. The input circuit 247 is connected to the various sensors 214, 228 and 229, while the central processing unit 241 is connected to the pressure control valve 216 and flow control valve 217 via a D/A converter 249 and an amplifier 250. The output circuit 248 is connected to the various solenoid valves provided in the hydraulic circuit such as the actuators 213, 215, 224 and 231.

The standard molding conditions setting section 242 sets conditions A used during production of the standard molded product (for the purposes of expediency, A refers to standard molding conditions, and is distinguished from B, which refers to the mold cleaning conditions described below), such as the A injection conditions such as injection pressure and velocity, the A value of the resin mass, the A cooling period, and the A clamping pressure. Similarly, the mold cleaning conditions setting section 243 sets the conditions B used during cleaning of the molds 226 and 227, such as the B injection conditions, the B value of the resin mass, the B cooling period, and the B mold opening stop position.

Typically, the mold cleaning conditions B are set relative to the standard molding conditions A as shown below, but in some cases the opposite may be true for one or more of the values.
Injection pressure : A ≧ B
Injection velocity : A ≦ B
Mass value : A ≦ B
Cooling period : A ≧ B
The standard molding operations frequency counter 244 and the mold cleaning operations frequency counter 245 set the values for the number of molding operations producing standard molded products, id the number of mold 226,227 cleaning operations respectively. Furthermore, the mold retraction setting section 246 sets the distance which the end plate 222 retracts (towards the left as shown in Figure 12) during mold cleaning operations.

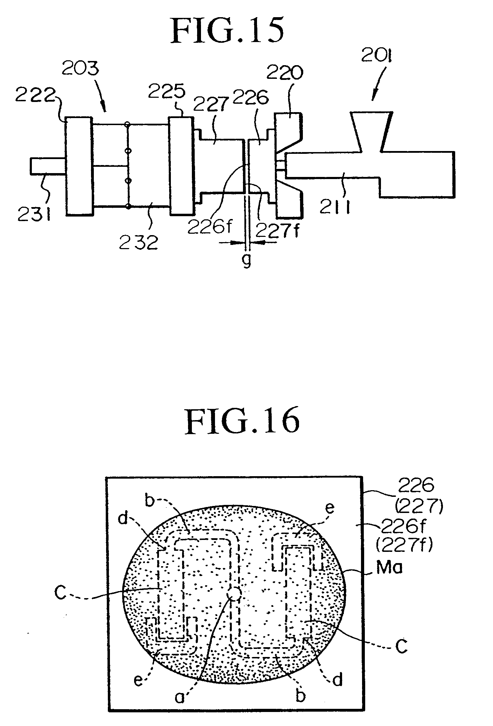

The aforementioned retraction distance will vary depending on such factors as the resin variety, the injection (filling) pressure and the mold construction, and so generalisation is difficult, but a typical value for the separation (g) (see Figure 15) of the mating surfaces 226f, 227f of the molds 226, 227 following completion of the resin injection is 0.2∼3 mm, with 0.5∼2 mm being preferable. The central processing unit 241 has a judgement signal output capability which distinguishes the mold cleaning products produced under the mold cleaning conditions.

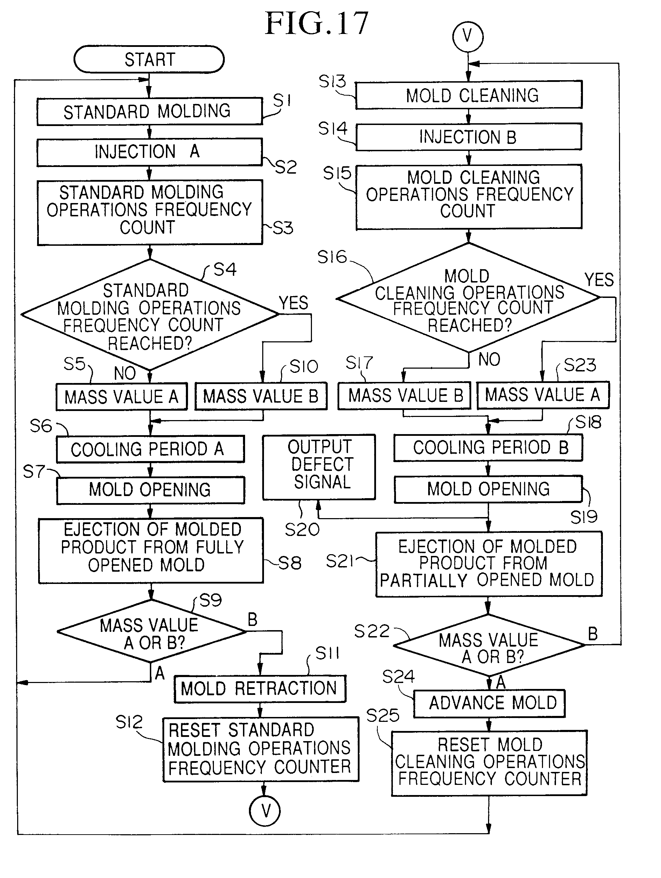

The central processing unit 241 of the control unit 204 carries out the injection molding by controlling (a) the actuators 213, 215, 224 and 231 in accordance with the values recorded in the setting sections 242, 243 and 246 and the counters 244 and 245, and (b) the output signals from the sensors 214, 228 and 229. The practicalities of the controlling of the molding operation are explained below based on the flow chart shown in Figure 17. The basic structures of the injection device 201, the molding device 202 and the clamping device 203 are generally well known, as is the basic structure of the control device 204 with the exception of the mold cleaning conditions setting section 243, the counters 244, 245 and the mold retraction setting section 246.

When operation is commenced, the standard regular molding is carried out (step 1) under the molding conditions set in the standard molding conditions setting section 242. That is, when injection is carried out under A injection conditions (step S2), the standard molding operations frequency counter 244 is increased by one (step S3) and a judgement made as to whether or not the set number of molding repetitions has been reached (step S4). If this set number of molding repetitions has not been reached then weighing is carried out to mass value A (step S5) and following cooling for cooling period A at step S6, the mold is opened (step S7); and the molded product ejected from the fully opened mold (step S8). In step S9 the mass value is judged and in the case of mass value A the procedure repeats from step S1.

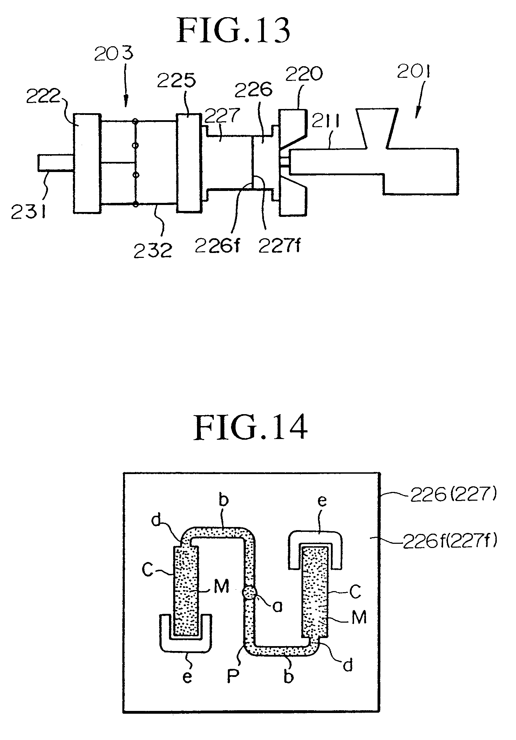

In standard molding operations the two mating surfaces 226f, 227f of the molds 226, 227 are clamped tightly together, with no gap between them, as shown in Figure 13. As a result, the injected resin 200, which is injected from the injection device 201, and passes through the sprue section (a), the runner sections (b), and the gate sections (d) into the cavities C will not leak into the gap between the mating surfaces 226f, 227f of the molds 226,227 in any appreciable quantity, and will thus produce normal molded products M. Furthermore, no resin leakage occurs into the air vents, represented by symbol (e) and provided for the removal of gas from the cavities C.

In step S4 if the counter has reached the set number of repetitions, weighing is carried out to mass value B (step S10). Moreover, for mass value B, from step S9 the procedure moves to step S11, mold retraction, and the end plate 222 is retracted (towards the left in Figure 12) by the amount fixed in the mold retraction setting section 246. Retraction of the end plate 222 will produce a situation where, following mold clamping and subsequent completion of the injection process, a small gap exists between the two mating surfaces 226f, 227f of the molds 226, 227.

Next, the standard molding operations frequency counter 244 is reset (step S12) and mold cleaning operations are performed (step S13). That is, when injection is carried out under B injection conditions (step S14), the mold cleaning operations frequency counter 244 is increased by one (step S15) and a judgement is made as to whether or not the set number of cleaning repetitions has been reached (step S16).

If this set number of cleaning repetitions has not been reached then weighing is carried out to mass value B (step S17) and following cooling for cooling period B at step S18, the mold is opened (step S19), a defect (judgement) signal is output by the central processing unit 241 (step S20), and at the same time the mold cleaning product is ejected from the partially opened mold (step S21). In step S22 the mass value is judged and in the case of mass value B the procedure repeats from step S13.

For mold cleaning operations, following mold clamping and subsequent completion of the injection process, a gap g will exist between the mating surfaces 226f, 227f of the molds 226, 227, as shown in Figure 15. Consequently, the injected resin 200, which is injected from the injection device 201, and passes through the sprue section (a), the runner sections (b), and the gate sections (d) into the cavities C, will flow into this gap between the mating surfaces 226f, 227f of the molds 226, 227 in considerable quantity.

Hence, any small amounts of resin adherents which have stuck to the mating surfaces 226f, 227f of the molds during standard molding operations will be melted by, and absorbed into this large quantity of molten resin, and then be removed from the molds 226,227 together with the mold cleaning product Ma.

The mold cleaning product Ma is a defective item and so needs to be separated from the standard molded products M. The defect signal in step S20 could, for example be output to a judgement robot (not shown) for completion of this separation function. In the embodiment shown in the figures, the molded products M and mold cleaning products Ma are ejected from the mold with differing degrees of mold opening (full mold opening for the former, partial mold opening for the latter), and so this in itself actually assures that no mixing occurs.

In step S16 if the counter has reached the set number of repetitions, weighing is carried out to mass value A (step S23). Furthermore, for mass value A, from step S22 the procedure moves to step S24, and the end plate is advanced and returned to the correct position for standard molding operations. Next, the mold cleaning operations frequency counter 245 is reset (step S25), and the procedure moves back to step S1.

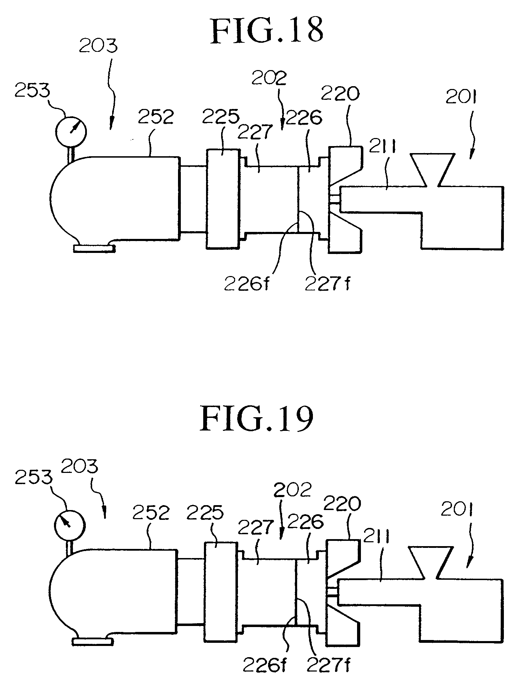

Figures 18 to 20 show a further embodiment of the present invention. In this particular embodiment the injection molding apparatus is a direct pressure injection molding apparatus, with the clamping device 203 comprising a large hydraulic cylinder (actuator) 252. This hydraulic cylinder 252 has a clamping pressure sensor 253 provided. Construction of the injection device 201, and with the exception of the end plate 222, the construction of the fixed plate 220 and the movable plate 225 of the clamping device are the same as for the injection molding apparatus shown in Figure 12.

Furthermore, the control device 204, is the same as that in Figure 12 minus the mold retraction setting section 246, and with the addition of a clamping pressure B to the mold cleaning conditions setting section 243. The clamping pressure sensor 253 is connected to the input circuit 247 and the clamping pressures are set so that A > B. The value for clamping pressure B will vary and so cannot be generalised, but should be sufficient to produce, following completion of the injection process, a similar separation range g between the mating surfaces 226f, 227f as that mentioned in the previous embodiment.

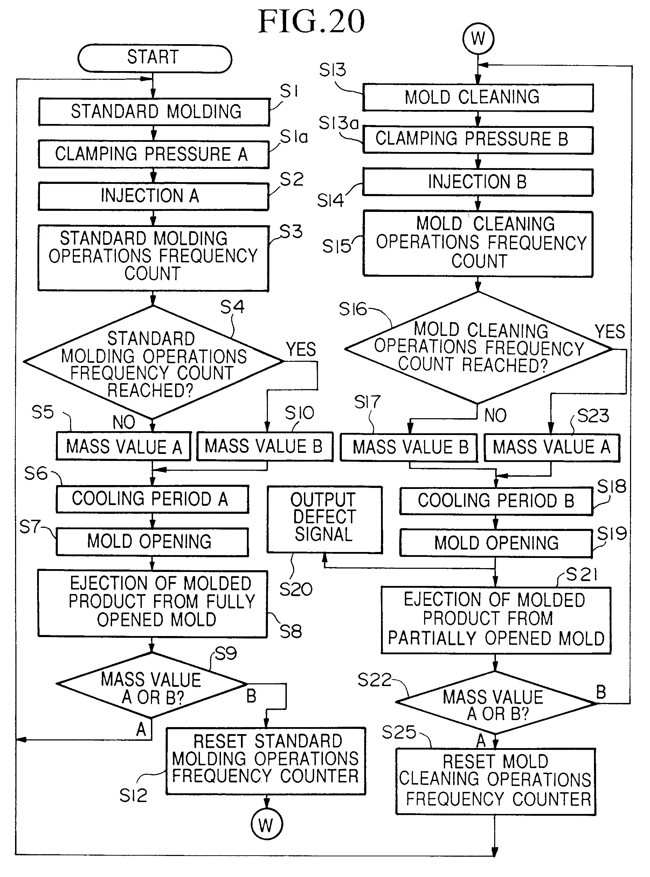

Figure 20 shows the flow chart for this injection molding apparatus. Comparison with the flow chart in Figure 17 reveals the addition of steps S1a and S13a, and the removal of steps S11 and S24. In explanation, in the step S1a the clamping pressure is set at the standard molding condition clamping pressure A, and in step S13a it is set to the mold cleaning condition clamping pressure B. Furthermore for mass value B at step S9 the procedure moves directly to step S12, and for a mass value A at step S22 the procedure moves directly to step S25.

Hence, with the mold injection apparatus of this embodiment the main difference between the standard molding operation and the mold cleaning operation is the difference between a large and a small clamping pressure. Hence if the apparatus is not in operation it is difficult to distinguish the two configurations by sight (refer to Figures 18, 19).

With the present invention it would be feasible to remove either, or both of the counters 244 and 245 and establish a system where the alternation between standard molding operation and mold cleaning operation was achieved by operation of a push button device, or the like. Furthermore, the alternation between the standard molding operation and the mold cleaning operation could also be carried out by a different signal, such as the switching signal for a resin production lot. The present invention can also be employed with electrically operated injection mold apparatus.

### INDUSTRIAL APPLICABILITY

As outlined above, the resin molding method and resin molding apparatus of the present invention allow low cost, yet efficient cleaning of adherents formed during molding operations by a simple technique, which does not require the conventional detailed method involving opening up the molds and cleaning. It is consequently applicable to all instances where cleaning is to be carried out reliably with high efficiency without additional costs or reduction in molding efficiency.

## Claims

1. A method of molding resin using a resin molding apparatus comprising; a resin injection section, a cavity formed when mating surfaces of a plurality of molds are fitted together, a molten resin passage for connecting to said resin injection section, and a gate section for connecting said molten resin passage to said cavity, wherein molten resin is first introduced into said cavity from said resin injection section via said molten resin passage and said gate section, then following hardening of the resin, the molds are unclamped, the mating surfaces separated, and the molded product then ejected from the cavity,
characterised in having a cleaning process wherein; the molds are loosened to enable the mating surfaces to move apart slightly, the molten resin is then injected from the injection section so that the molten resin flows into the cavity and the gap between the mating surfaces of the mold, and after hardening, the molded product formed as one in the cavity and the small gap between the mating surfaces is ejected.

2. A method of molding resin according to claim 1, wherein in said cleaning process, after the molds are loosened to enable the mating surfaces to move apart slightly, then once the mating surfaces have been moved apart slightly, the molten resin is injected from the injection section so that the molten resin flows into the cavity and the gap between the mating surfaces of the mold.

3. A method of molding resin according to claim 1, wherein in said cleaning process the molds are loosened to enable the mating surfaces to move apart slightly, and a slightly greater volume of resin than that corresponding to the volume of the cavity is injected from the injection section so that the molten resin flows into the cavity and overflows therefrom, and is forced into the gap between the mating surfaces of the mold by the pressure.

4. A method of molding resin according to any one of claims 1 through 3, wherein with said plurality of molds, an air vent section for the purpose of air removal, is formed adjoining the cavity, in the respective mating surfaces, by fixing the molds together in their mating condition,
and in said cleaning operation, the molten resin is injected from the injection section so that the molten resin flows into the cavity and the gap between the mating surfaces of the mold, and also flows into said air vent section via the gap between the mating surfaces of the mold.

5. A method of molding resin using a resin molding apparatus comprising; a resin injection section, a cavity formed when mating surface of a plurality of molds are fitted together, a molten resin passage for connecting to the resin injection section, and a gate section for connecting the molten resin passage to the cavity, wherein molten resin is first introduced into said cavity from said resin injection section via said molten resin passage and said gate section, then following hardening of the resin, the molds are unclamped, the mating surfaces separated, and the molded product then ejected from the cavity,
characterised in that said gate sections are provided for a single cavity at two mutually opposite locations with the cavity therebetween, and said molten resin passage is branched into two with each branch connected to a corresponding gate section, and on completion of each predetermined molding cycle, the gate section used for injecting resin into the cavity is alternated.

6. A method of molding resin according to claim 5, wherein shut-off pins are respectively provided in each branch of said branched molten resin passage for shutting off the respective branch, and one of said branch portions are shut-off by one of said shut-off pins, and molten resin is injected from the gate section into the cavity via the other open branch portion.

7. A method of molding resin using a resin molding apparatus comprising; a resin injection section, a cavity formed when mating surfaces of a plurality of molds are fitted together, an air vent section for the purpose of air removal, formed adjoining the cavity, in the respective mating surfaces, by fixing said plurality of molds together in their mating condition, a molten resin passage for connecting to said resin injection section, and a cavity gate section for connecting the molten resin passage to said cavity,
wherein molten resin is first introduced into said cavity from said resin injection section via said molten resin passage and said cavity gate section, then following hardening of the resin, the molds are unclamped, the mating surfaces separated, and the molded product then ejected from the cavity,
characterised in having an air vent gate provided in said air vent for connecting said air vent to said molten resin injection section, and
a cleaning process wherein; the molds are loosened to enable the mating surfaces to move apart slightly, the molten resin is then injected from the injection section so that the molten resin flows from said air vent gate to said air vent and the gap between the mating surfaces of the mold, and into the cavity via the gap between the mating surfaces of the mold, and after hardening, the molded product formed as one in the cavity, the small gap between the mating surfaces, and the air vent, is ejected.

8. A method of molding resin using a resin molding apparatus comprising; a resin injection section, a cavity formed when mating surfaces of a plurality of molds are fitted together, a molten resin passage for connecting to said resin injection section, a gate section for connecting said molten resin passage to said cavity, an aperture formed in a cavity surface forming said cavity of said mold, and an ejector pin fitted into said aperture,
wherein with the end surface of the ejector pin aligned with the cavity surface of the mold, molten resin is first introduced into said cavity from said resin injection section via said molten resin passage and said gate section, then following hardening of the resin, the molds are unclamped, the mating surfaces separated, and the molded product in said cavity then ejected by pushing out said ejector pins from said mold,
characterised in that with said ejector pins retracted into the apertures so that their end surfaces are recessed from the cavity surface of the mold the molten resin is injected from the injection section so that the molten resin flows into said cavity and said apertures, and after hardening, the molded product formed as one in said cavity and said apertures is ejected by pushing out said ejector pins.

9. An apparatus for molding resin comprising:
a molding apparatus which forms molded products by injecting molten resin into a mold and in which standard molding conditions for forming standard molded products, and cleaning conditions for forming a cleaning molded product for cleaning the mold can be switched,
a standard molding conditions setting section for setting molding conditions for said standard molding conditions and outputting the set molding conditions,
a mold cleaning conditions setting section for setting molding conditions for said cleaning conditions and outputting the set molding conditions,
a central processing unit for controlling operation of said molding apparatus, and
switching means for selectively connecting one of said standard molding conditions setting section and said mold cleaning conditions setting section to said central processing unit.

10. An apparatus for molding resin according to claim 9, wherein said switching means counts the number of molding operations under standard molding conditions with said central processing unit connected to said standard molding conditions setting section, and when the counted number matches a previously set number, connects the central processing unit to said mold cleaning conditions setting section.

11. An apparatus for molding resin according to either one of claims 9 and 10, wherein said central processing unit outputs a discriminating signal indicating that the molded product is a mold cleaning product when a mold cleaning product is formed by the molding apparatus, based on molding conditions output from said mold cleaning conditions setting section.
